# EUROPEAN PATENT SPECIFICATION

(11) **EP 4 048 592 B1**
(45) Date of publication and mention of the grant of the patent: **30.04.2025**
(21) Application number: 20878957.8
(22) Date of filing: 26.06.2020
(51) Int. Cl.: G06Q 10/0631, G06Q 50/02

(54) **METHODS AND SYSTEMS FOR THE BATCH DELIVERY OF MATERIAL TO A CONTINUOUS MATERIAL PROCESSOR**
VERFAHREN UND SYSTEME ZUM CHARGENWEISEN ZUFÜHREN VON MATERIAL ZU EINER KONTINUIERLICH MATERIALVERARBEITENDE VORRICHTUNG
PROCÉDÉS ET SYSTÈMES POUR LA DISTRIBUTION PAR LOTS DE MATÉRIAU À UN PROCESSEUR DE MATÉRIAU EN CONTINU

(30) Priority: 21.10.2019 US 201916659109
(43) Date of publication of application: 31.08.2022
(73) Proprietor: Freeport-McMoRan Inc., Phoenix, Arizona 85004 (US)
(72) Inventor: WALKER, Mary Amelia, Phoenix, Arizona 85004 (US); CATRON, Robert, Phoenix, Arizona 85004 (US); VAUGHAN, Brian, St. Louis, Missouri 63043 (US); LU, Hung Jung, St. Louis, Missouri 63043 (US); HICKSON, Nicholas, Phoenix, Arizona 85004 (US)
(74) Representative: Potter Clarkson
(86) International application number: PCT/US2020/039741
(87) International publication number: WO 2021/080655

(56) References cited:
- WO-A1-2019/095004
- US-A1- 2002 019 759
- US-A1- 2011 036 857
- US-A1- 2011 108 404
- US-A1- 2013 192 524
- US-A1- 2014 373 755
- US-A1- 2015 285 650
- US-A1- 2019 318 629
- US-B1- 6 173 214

## Description

### Technical Field

The present invention relates to material processing systems in general and more specifically to systems and methods for the batch delivery of earthen materials to continuous material processing systems.

### Background Art

Mining and quarrying operations typically involve the delivery of large amounts of earthen materials, such as quarried rock or excavated ore, to various types of continuous material processing systems, either for further comminution and screening (e.g., in quarrying operations) or to recover metals or other valuable minerals (e.g., in mining operations). In a mining operation, such further processing usually involves one or more comminution or size-reduction steps to reduce the size of the excavated ore from a relatively coarse size to a finer size suitable for subsequent processing. Thereafter, the size-reduced ore may be subjected to any of a wide range of processes to separate the commercially valuable minerals or metals from the waste material or gangue.

In a typical open-pit mining operation, the ore to be mined is periodically fractured (e.g., by blasting). Large shovels are then used to load the fractured ore into haul trucks. The haul trucks then carry the excavated ore to other locations and processing systems, such as stockpiles, ore crushers, and grinders, for further processing. Open-pit mining operations are conducted on a large scale, and a given open pit mine may involve the use of a large number of shovels, haul trucks, and crushers in order to process the large volumes of excavated ore involved.

The overall efficiency of the mining operation is based in part on the efficiency of the processes for delivering the excavated ore to the various locations for further processing. While various types of fleet management systems have been developed and are being used to manage such operations, additional improvements mining operations are constantly being sought.

WO 2019/095004 discloses a mining system for directing mine operations that include a flow planner and a dispatcher. The flow planner receives operating parameters and global mine data and calculates a flow plan based on the operating parameters and the global parameters. The dispatcher then determines dispatch assignments based on the flow plan from the flow planner, and effects a dispatch of mining equipment based on the dispatch assignments.

U.S. 2019/318629 discloses a resource transportation system that includes a routing command subsystem. The routing command subsystem is communicably coupled to a first input device at a first location and a location input device associated with a transporter. The first input device determines a first resource factor of a resource at the first location. The location input device determines a transporter location. The routing command subsystem changes a first endpoint of a transporter route to a first alternate location based on the first resource factor and the transporter location.

### Disclosure of Invention

The present invention comprises a computer-implemented method, system and computer program product as defined in the claims. Embodiments that do not fall within the scope of the claims are to be interpreted as examples useful for understanding the invention. One embodiment of a method of directing the movement of a plurality of batch delivery systems delivering material from at least one loading area to at least one continuous material processor includes: Determining a location of each of at least two of the plurality of batch delivery systems; determining a state of each of the located batch delivery systems; predicting an estimated time of arrival at the continuous material processor of a loaded batch delivery system in transit from the loading area to the continuous material processor; predicting a number of loaded batch delivery systems that will be located at the continuous material processor at a future time; estimating an idle time for the predicted number of loaded batch delivery systems at the continuous material processor; predicting a time when the continuous material processor will be in a No-Material state; and directing the movement of at least one of the plurality of batch delivery systems to minimize at least one of the estimated idle time and the time when the continuous material processor will be in the No-Material state.

Also disclosed is a method of directing the movement of a plurality of haul trucks in a mining operation, the haul trucks delivering excavated ore from at least one loading area to at least one ore crusher that includes: Determining a location of each of at least two of the plurality of haul trucks; determining a state of each of the located haul trucks; predicting an estimated time of arrival at the ore crusher of a loaded haul truck in transit from the loading area to the ore crusher; predicting a number of loaded haul trucks that will be located at the ore crusher at a future time; estimating an idle time for the predicted number of loaded haul trucks at the ore crusher; predicting a time when the ore crusher will be in a No-Material state; and directing the movement of at least one of the plurality of haul trucks to minimize at least one of the estimated idle time and the time when the ore crusher will be in the No-Material state.

Also disclosed is a non-transitory computer-readable storage medium having computer-executable instructions embodied thereon that, when executed by at least one computer processor cause the processor to: Determine the location and state of each of at least two of a plurality of batch delivery systems, the plurality of batch delivery systems delivering material from at least one loading area to at least one continuous material processor; predict a number of loaded batch delivery systems that will be located at the continuous material processor at a future time based at least on the location and state of each of the at least two batch delivery systems; and generate a prediction window, the prediction window including at least the predicted number of loaded batch delivery systems at the continuous material processor for at least the future time.

A system for directing the movement of a plurality of batch delivery systems delivering material from at least one loading area to at least one continuous material processor is also disclosed that may include a network. A plurality of sensors operatively associated with each of said plurality of batch delivery systems and said network sense at least a position and a state of each of the plurality of batch delivery systems. A processing system operatively associated with the network is configured to: Determine the location and state of each of at least two of the plurality of batch delivery systems; estimate an idle time for a predicted number of loaded batch delivery systems that will be located at the continuous material processor at a future time based at least on the location and state of each of the at least two batch delivery systems; and predict a time when the continuous material processor will be in a No-Material state. A director operatively associated with the plurality of batch delivery systems and the processing system directs the movement of at least one of the plurality of batch delivery systems to minimize at least one of the estimated idle time and the time when the continuous material processor will be in the No-Material state.

### Brief Description of the Drawings

Illustrative and presently preferred exemplary embodiments of the invention are shown in the drawings in which:
Figure 1 is a schematic representation of a system for the batch delivery of material to a continuous material processor according to one embodiment of the present invention;
Figure 2 is a flow chart of one embodiment of a method for the batch delivery of material to a continuous material processor according to the present invention;
Figure 3 is a pictorial diagram including a state matrix for determining the state of a haul truck located at the loading shovel or the ore crusher;
Figure 4 is a schematic representation of routes followed by haul trucks between the shovel and the ore crusher and showing the locations of snap points defined along the routes;
Figure 5 is a pictorial representation showing an optional step of determining shovel splits;
Figure 6 is a pictorial diagram including a tabular listing of predicted material splits for unloaded haul trucks;
Figure 7 is a pictorial diagram including a tabular listing of estimated times of arrival for trucks traveling to and from the ore crusher;
Figure 8 is a pictorial representation of a prediction window showing a prediction of the number of haul trucks predicted to be at the ore crusher at various future times;
Figure 9 is a schematic representation of a crusher surge bin showing exemplary Low, Operating, and High limits;
Figure 10 is a pictorial representation illustrating one embodiment of determining the location of an event horizon cutoff;
Figure 11 is a flow chart representation including a tabular listing of a delay table showing elapsed durations and predicted time remaining for equipment in planned Delay states; and
Figure 12 is a table of historical data for equipment in Delay or Down states.

### Best Mode for Carrying Out the Invention

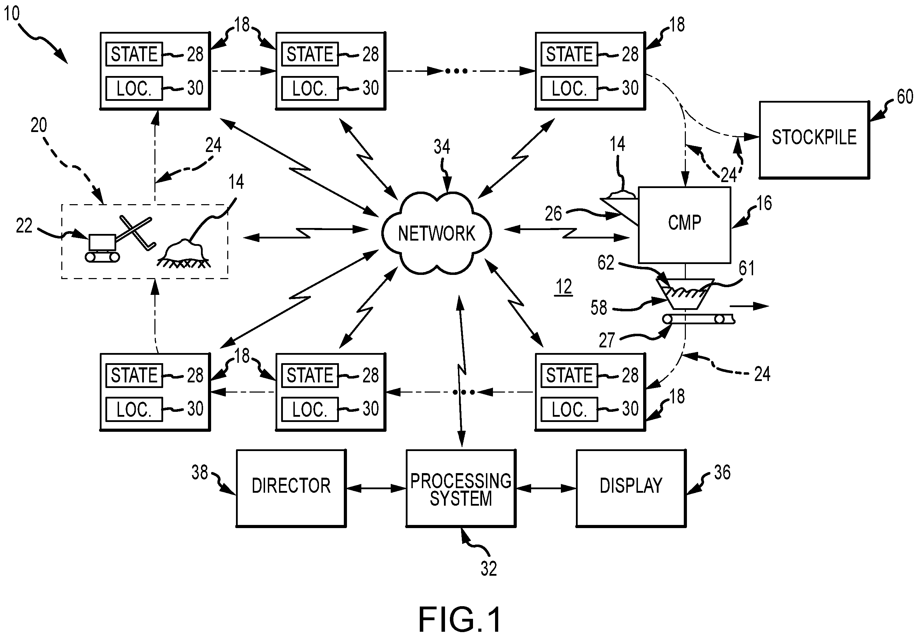

One embodiment of a system 10 for the batch delivery of material to a continuous material processor is illustrated in Figure 1 as it could be used in a mining operation 12 in which material, such as excavated ore 14, is delivered to one or more continuous material processors such as, for example, one or more ore crushers 16. In the particular embodiments shown and described herein, a plurality of batch delivery systems, such as haul trucks 18, are used to carry the excavated ore 14 from one or more loading areas 20 one or more ore crushers 16. A shovel 22 located in each loading area 20 is used to fill the haul trucks 18 with the excavated ore 14. The haul trucks 18 then carry the excavated ore 14 to the ore crusher 16, e.g., via a mine road network 24, whereupon the haul trucks 18 dump or unload the excavated ore 14 into a crusher feed bin 26. The crusher feed bin 26 feeds the excavated ore 14 into ore crusher 16, which then discharges crushed ore 62 onto a conveyer system 27. Conveyer system 27 then carries away the crushed ore 62 for further processing. The haul trucks 18, which are now empty, may then return to the loading area 20 to pick up another load of excavated ore 14.

System 10 may include a state sensing system 28 that is operatively associated with each batch delivery system or haul truck 18. State sensing system 28 may be used to sense the state of each haul truck 18 at least at each of the ore crusher 16 and loading area 20, although the state could be determined for other locations as well. As will be described in greater detail herein, example haul truck states include, but are not limited to, an Idle in Queue state, a Spot state, and Idle at Equipment Face state, a Loading state, and a Dumping state. System 10 may also comprise a position or location sensing system 30 that is operatively associated with each haul truck 18. Position or location sensing system 30 senses the position or location of each haul truck 18 as it travels between the continuous material processor 16 and loading area 20.

The state and position sensing systems 28 and 30 may be operatively connected to a processing system 32 via one or more network systems 34. Processing system 32 may also be operatively associated with (e.g., via network 34) aspects and systems of the ore crusher 16 and shovel 22, as will be described in further detail herein. Processing system 32 processes information and data from the state and position sensing systems 28 and 30, as well as aspects and systems of the ore crusher 16 and shovel 22 in accordance with the teachings provided herein in order to direct the movement of the haul trucks 18 between the loading area 20 and the ore crusher 16.

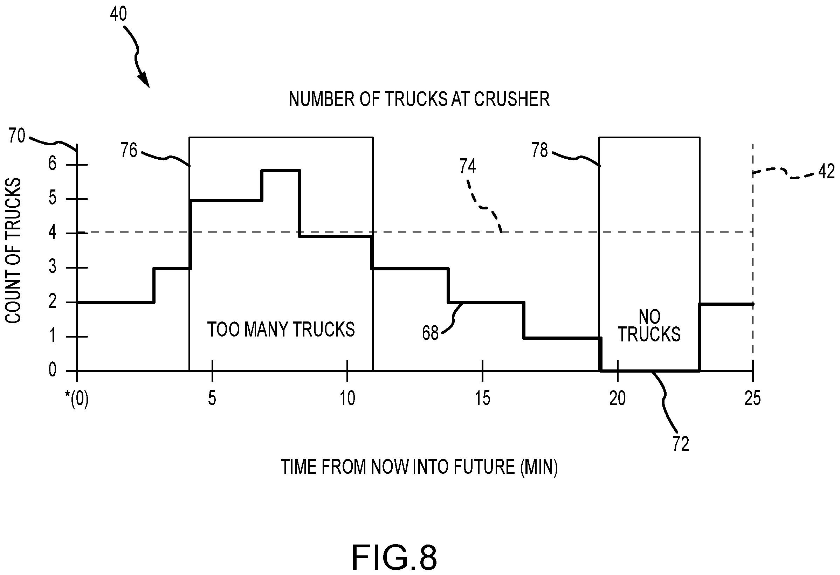

Processing system 32 also may be operatively connected to a display system 36 and a director 38. Display system 36 may be used to provide a visual depiction or display of information and data relating to the operation of the system 10 and the movement of the haul trucks 18 between the loading area 20 and the ore crusher 16. Display system 36 may also be used to display a prediction window 40 (Figure 8) that includes information about the number of loaded haul trucks 18 that are predicted to be at the continuous material processor or ore crusher 16 at various times in the future. Display system 36 may also be used to display an optional event horizon cutoff 42, beyond which the prediction may be below a defined level of confidence or reliability.

Director 38 is responsive to information and data produced by processing system 32 and may be used to direct the movement of at least one of the plurality of haul trucks 18 in order to minimize at least one of an estimated idle time (e.g., at either or both of the loading area 20 or ore crusher 16) and the time when the continuous material processor 16 may be in a No-Material state. In one embodiment, director 38 may interface with a fleet management system (not shown) associated with the mining operation 12 to direct the movement of the haul truck(s) 18, although other arrangements are possible. As will be explained in greater detail herein, directing the movement of at least one of the plurality of haul trucks 18 may include assigning (and/or reassigning) a destination for at least one of the haul trucks 18 in order to minimize at least one of an estimated haul truck idle time and the time when the continuous material processor or ore crusher 16 will be in a No-Material state.

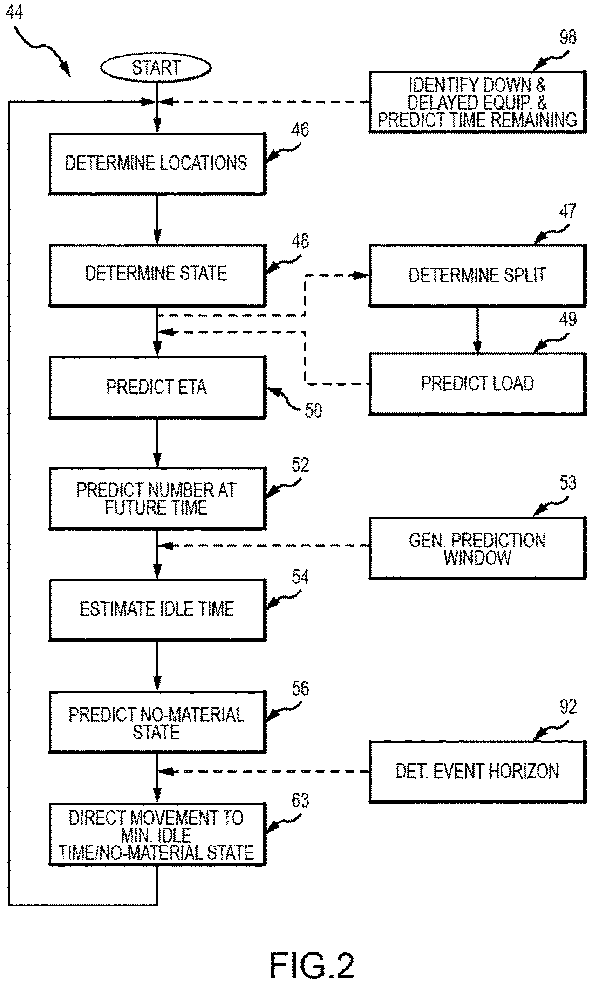

Referring now primarily to Figure 2, the various components of system 10 may be configured or programmed to operate in accordance with a method 44 to direct the movement of the haul trucks 18 between the loading area 20 and the ore crusher 16. A first step 46 of method 44 may involve determining the locations of at least two, and more preferably all, of the haul trucks 18 that are to be used to carry excavated ore 14 from the loading area 20 to ore crusher 16. The location determination may involve determining whether the haul trucks 18 are located at the continuous material processor 16, the loading area 20, or elsewhere, e.g., traversing road network 24. In one embodiment, the system 10 and method 44 of the present invention locate the positions of the haul trucks 18 with a great deal of accuracy e.g., to within an accuracy of about 9 m (about 30 feet) of their actual positions.

A next step 48 of method 44 involves determining the state of the located haul trucks 18. As mentioned, the state of the located haul trucks 18 includes, but is not limited to, determining the state of haul trucks located at the ore crusher 16 and the loading area 20. The state determination may include whether the located haul trucks 18 are in the Idle in Queue state, the Spot state, the Idle at Equipment Face state, the Loading state, or the Dumping state, as the case may be.

After having determined the locations and states of the haul trucks 18, the method 44 then proceeds to step 50 in which the system 10 predicts the estimated time of arrival (ETA) at the ore crusher 16 of at least those haul trucks 18 that are in transit to the ore crusher 16. The ETAs of the haul trucks 18 are used to predict, at step 52, the number of loaded haul trucks 18 that will be at the ore crusher 16 at one or more future times. A next step 54 of method 44 estimates an idle time for at least one loaded haul truck 18 that will be at the ore crusher 16. As will be described in further detail herein, the idle time may include the total time that haul truck 18 is estimated or predicted to remain at the ore crusher 16, either waiting in the queue or involved in the dumping operation. The idle time may also include the total time that a haul truck 18 is estimated or predicted to remain at the loading area 20, again either waiting the in the queue or involved in the loading operation.

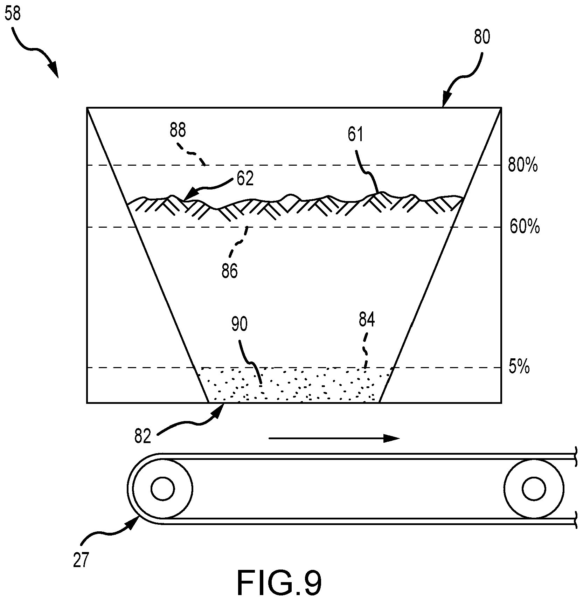

Step 56 predicts when the ore crusher 16 will be in a No-Material state. As will be described in greater detail herein, the prediction of when the ore crusher 16 will be in a No-Material state involves predicting a level 61 (Figures 1 and 9) of crushed material 62 that will be in a surge bin 58 located below the ore crusher 16 at one or more future times. The system 10 then directs, at step 63, the movement of at least one of the haul trucks 18 to minimize at least one of the estimated idle time and the time when the ore crusher 16 will be in a No-Material state.

As will be described in much greater detail herein, idle times may be minimized based on the number of loaded haul trucks 18 that are predicted to be at the ore crusher 16 at one or more future times. If an excess number of haul trucks 18 is predicted, the system and method of the present invention may reroute one or more haul trucks 18 to an alternate destination, such as, for example, a crusher stockpile 60 (Figure 1) or to another extraction process (not shown) located within the mining operation 12. In embodiments involving multiple ore crushers 16, one or more haul trucks 18 could be rerouted or directed to another ore crusher entirely.

No-Material states at the ore crusher 16 may be minimized by ensuring that a minimum number of haul trucks 18 are always predicted to be at the or crusher 16 at one or more of the future times. If no trucks 18 are predicted to be at the crusher 16 at one or more of the future times, the systems and methods of the present invention may avoid a No-Material state (or at least reduce the expected duration of such a No-Material state) by directing that the crusher 16 be fed from the crusher stockpile 60 at the appropriate time. No-Material states at the ore crusher 16 may be eliminated (or at least minimized) based on the predicted level 61 of crushed ore 62 in the surge bin 58 at one or more future times. That is, even though no haul trucks 18 may be predicted to be located at the ore crusher 16 at the one or more future times, the level 61 of crushed ore 62 in the surge bin 58 may be sufficient to allow continued delivery of crushed ore 62 to conveyor system 27 until the next loaded haul truck 18 arrives at the ore crusher 16. If so, the systems and methods of the present invention may simply await the arrival at the crusher 16 of the next en-route haul truck 18. The various steps comprising method 44 may be repeated on a continuous basis to minimize the haul truck idle time and/or the time when the ore crusher 16 will be in a No-Material state.

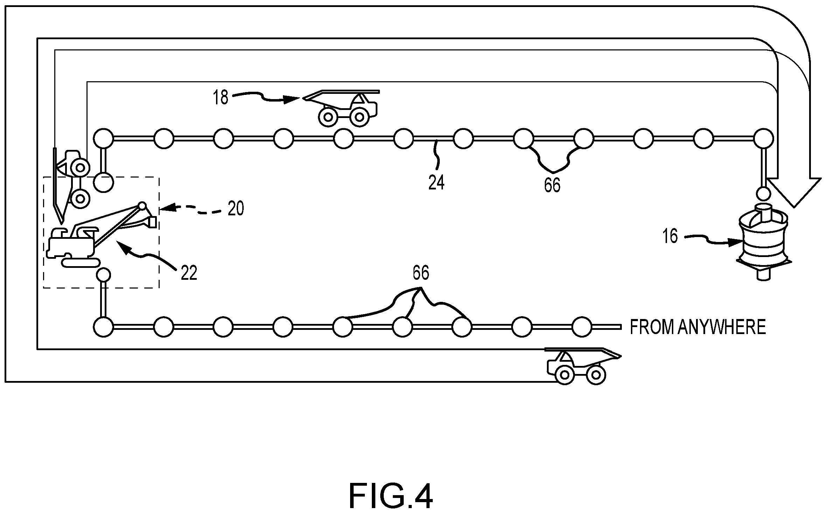

In addition, and as will be described in greater detail below, the system and methods of the present invention may use one or more of the following historical and estimated data in order to minimize the idle time and/or the time when the ore crusher 16 will be in a Non-Material state. For example:
- For trucks 18 at the loading area 20, the system and methods disclosed herein may use historical spot and load times to estimate idle and total times at the loading area 20.
- The estimated arrival time of an empty truck 18 at the loading area 20 may be based on historical travel time from a given point on the return path to the shovel and the idle time at the loading area.
- The estimated arrival time (ETA) of a loaded truck 18 at the ore crusher 16 may be based on the estimated time remaining at the loading area 20 plus the historical travel time from the loading area 20 to the ore crusher 16.
- The estimated arrival time (ETA) of a loaded haul truck 18 at the ore crusher 16 may be updated based on historical travel time from each given point (e.g., snap point 66, Figure 4) on the road network 24 from the loading area 20 to the ore crusher 16.
- For trucks 18 at the ore crusher 16, the systems and methods disclosed herein may use historical spot, dump, and crush-out times to predict idle time, surge bin level, and total time at the ore crusher 16.
- If a delay occurs during travel to or from the ore crusher 16, the systems and methods disclosed herein may predict the time remaining due to the delay based on historical data.

A significant advantage of the present invention is that it may be used to increase the efficiency of material handling systems wherein portions of the system handle materials on a batch basis and other portions handle the materials on a continuous basis. For example, in a typical mining or quarrying operation, it is desirable to operate the fracturing and shovel operations to maximize shovel production. However, the fracturing and shovel operations are inherently batch-type operations, with the material being fractured and removed in batches, rather than on a continuous basis. It is also desirable to operate the continuous material processing systems or ore crushers 16 to maximize crusher production. Of course, such crushing systems operate on a continuous basis and require a continuous supply of material.

While the goal of both operations is to maximize production, we have discovered that in practice, attempts to maximize production of both the batch process (e.g., fracturing and shovel production) and the continuous process (e.g., ore crushing) creates a 'tug-of-war' between the two operations that results in cyclical waves of haul trucks 18 at the crusher 16 and loading area 20. At certain times there may be an excessive number of loaded haul trucks 18 at the crusher 16, which increases haul truck idle time and may result in a consequent shortage of empty haul trucks 18 at the loading area 20. Conversely, at other times there may be too few loaded haul trucks 18 at the ore crusher 16, which can result in a No-Material state at the ore crusher 16. Such a No-Material state, or a no-ore event, is also undesirable and results in inefficiencies and sub-optimal use of resources. Of course, a shortage of loaded haul trucks 18 at the crusher 16 may result in a consequent excess number of empty haul trucks 18 at the loading area 20, again resulting in excessive haul truck idle times, production inefficiencies, and sub-optimal use of resources.

The system and method of the present invention improves overall production efficiency by analyzing and controlling the operation of the system as a whole, i.e., shovel(s) 22, haul trucks 18, and ore crusher(s) 16. The analysis of the entire system is then used to predict the number of haul trucks 18 that will be located at the ore crusher 16 at one or more future times. In some embodiments, the system 10 and method 44 of the present invention may be used to predict the number of haul trucks 18 that will be at a given ore crusher 16 up to 30 minutes in the future. The predictions are also updated on a frequent basis, e.g., once per minute in most embodiments, thereby allowing the system and method of the present invention to account for rerouting of haul trucks 18 and/or equipment breakdowns or other issues that typically arise during operations.

Once the prediction has been made, the system 10 and method 44 may then direct the movement of the haul trucks 18 in order to minimize one or both of the haul truck idle time (i.e., at either or both of the ore crusher(s) 16 and loading area(s) 20) while ensuring that the ore crusher 16 never runs out of ore, i.e., enters the No-Material state. If necessary, the system 10 and method 44 may assign new destinations to the haul trucks 18, such as, for example, by assigning, directing, or redirecting one or more loaded haul trucks 18 to the crusher stockpile 60 or to another extraction process (not shown). In embodiments that involve the use of multiple ore crushers 16, the system 10 and method 44 of the present invention may assign, direct, or redirect one or more haul trucks 18 to an alternate ore crusher, thereby ensuring a steady delivery of ore to the various processing systems.

Another advantage of the system and method of the present invention is that the optimal number of haul trucks 18 that will need to be present at the ore crusher 16 at the future time is based on the actual performance of the particular ore crusher(s) 16 rather than on some theoretical or predetermined crusher throughput. For example, in the embodiments shown and described herein, the system and method use data from the surge bin 58 of the ore crusher 16 (e.g., the amount or level 61 of crushed ore 62 in surge bin 58) to predict the time when the ore crusher 16 will enter the No-Material state. The system and method may then use the predicted time of the No-Material state to direct (or redirect) the movement of the haul trucks 18 to ensure that the crusher 16 does not enter the No-Material state or that the time the crusher 16 will spend in the No-Material state will be minimized.

Similarly, the data from the surge bin 58 may also be used by the systems and methods of the present invention to predict when the surge bin 58 of the crusher 16 will exceed capacity, referred to herein as a Closed state. If such a Closed state is predicted, the systems and methods may direct one or more of the loaded haul trucks 18 to proceed to the crusher stockpile 60 or other extraction process instead. This process of determining when the ore crusher 16 will be "open for business" allows the systems and methods of the present invention to maximize crusher productivity, while minimizing or eliminating the times when an excessive number of loaded haul trucks 18 will be at the crusher 16.

Still other advantages are associated with the state and position sensing systems 28 and 30 associated with the haul trucks 18. Both systems 28 and 30 increase the predictive accuracy of the system 10 and method 44 of the present invention because they automatically (i.e., without the need for separate driver action) provide to the processing system 32 information and data related to the state and position of the various haul trucks 18. That is, the system 10 and method 44 of the present invention do not require affirmative reporting, e.g., "button pushing" by the haul truck driver or others, to inform the system 10 of the state or position of the haul truck 18. The position sensing system 30 also provides comparatively high-resolution position data, e.g., to within about 9 m (about 30 ft.), which significantly increases the accuracy of the predictions and allows the systems and methods disclosed herein to more accurately predict the ETAs for both loaded and empty trucks 18.

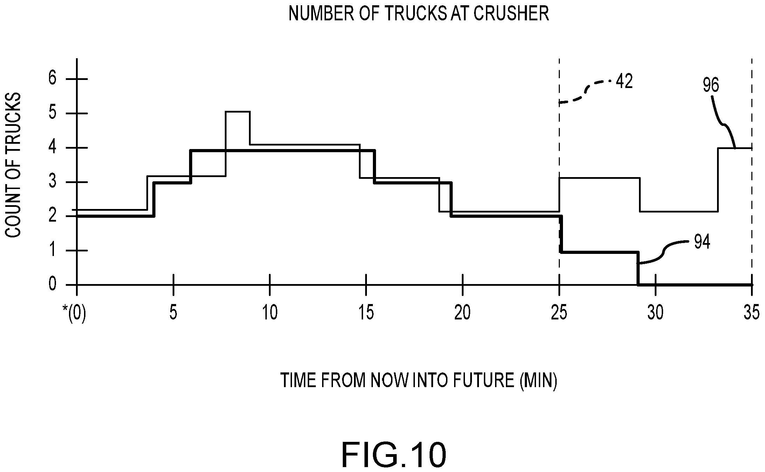

Still yet other advantages of the present invention are associated with the prediction window 40 (Figure 8). If displayed on display system 36, the prediction window 40 provides system operators and supervisors (not shown) with a visual representation of the number of haul trucks 18 that are predicted to be at the ore crusher 16 at one or more future times. The system operators may then use those predictions to ensure and/or verify that the haul trucks 18 are being correctly directed or redirected (i.e., by director 38) to minimize idle time and/or the time when the crusher 16 will be in the No-Material state. If desired, an event horizon cutoff 42 (Figures 8 and 10) may be displayed on the prediction window 40. The event horizon cutoff 42 provides a graphical representation of that future time beyond which the prediction will be below a defined level of confidence or reliability.

Having briefly described certain exemplary embodiments of systems and methods of the present invention, as well as some of their more significant features and advantages, various embodiments and variations of the systems and methods of the present invention will now be described in detail. However, before proceeding the description, it should be noted that while the various embodiments are shown and described herein as they could be used in an open pit mining operation to optimize the delivery of excavated ore to one or more ore crushers 16, the present invention is not limited to use in conjunction with mining applications. To the contrary, the present invention could be used in any of a wide range of applications that involve the batch delivery of materials to continuous processes, as would become apparent to persons having ordinary skill in the art after having become familiar with the teachings provided herein. Consequently, the present invention should not be regarded as limited to use in any particular type of application, environment, or equipment.

Referring back now to Figure 1, one embodiment of the system 10 for the batch delivery of material to a continuous material processor is shown and described herein as it could be used in an open-pit mining operation 12. In the mining operation 12, material, such as excavated ore 14, is delivered to one or more continuous material processors or ore crushers 16 that may be located at various places throughout the mining operation 12. In certain instances, some of which are described herein, the excavated ore 14 may be delivered to alternate locations, such as a crusher stockpile 60 or to other extraction processes, e.g., heap leaching processes (not shown) located elsewhere in the mine in order to minimize one or both of the idle times and No-Material states at the ore crusher(s) 16.

A plurality of batch delivery systems or haul trucks 18, may be used to carry the excavated ore 14 from one or more loading areas 20 to one or more ore crushers 16 (or to other destinations) via the mine road network 24. Once at the continuous material processor or ore crusher 16, a loaded haul truck 18 may unload or dump the excavated ore 14 into the crusher feed bin 26. Crusher feed bin 26 then feeds (e.g., on a continuous basis) the excavated ore 14 to the crusher 16. The empty haul trucks 18 may then be directed to return to the loading area 20 or some other destination, in accordance with the teachings provided herein.

In the particular embodiments shown and described herein, the batch delivery systems comprise off-road haul trucks 18 of the type commonly used in mining operations. However, it should be understood that the systems and methods of the present invention may be used in conjunction with other types of batch delivery systems configured to haul or carry other types of materials in other types of applications, as would become apparent to persons having ordinary skill in the art after having become familiar with the teachings provided herein. Consequently, the present invention should not be regarded as limited to any particular type of batch delivery system, such as haul trucks 18 of the type used in mining operations.

Still referring to Figure 1, the system 10 may comprise a state sensing system 28. State sensing system 28 may be operatively associated with each haul truck 18 and senses the operational state of the haul truck 18, at least when the haul truck 18 is located at the ore crusher 16 and the loading area 20. As was briefly described above, exemplary haul truck states include, but are not limited to, the Idle in Queue state, the Spot state, the Idle at Equipment Face state, the Loading state, and the Dumping state.

The Idle in Queue state is defined as that state during which the haul truck 18 is waiting in the queue (e.g., in line behind another haul truck 18) at either of the ore crusher 16 or loading area 20. The Spot state is defined as that state during which the haul truck 18 is moving into position, i.e., adjacent the crusher feed bin 58 or shovel 22, as the case may be. Stated somewhat differently, the Spot state is defined as that state during which the haul truck 18 is preparing to receive or dump a load of excavated ore 14. The Idle at Equipment face state is defined as that state during which the haul truck 18 is in the final position required to either receive or dump a load of excavated ore 14. The Loading and Dumping states are defined as those times or states during which the haul truck 18 is actually receiving or dumping a load of excavated ore 14, respectively.

In one embodiment, the state sensing system 28 is responsive to information and data produced by a plurality of sensors (not shown) operatively associated with various systems and devices of haul truck 18. The data produced by the sensors are used by the state sensing system 28 to determine the particular operational state of the haul truck 18, as just described. By way of example, the various defined states may be derived or ascertained from sensors operatively associated with the gear selector and/or transmission of the haul truck 18, sensors associated with the dump body position (e.g., either up or down), as well as the payload status (e.g., either loaded or empty) of the haul truck 18.

The various sensors may comprise all or a portion of a vehicle information management system (VIMS) and associated vehicle data network or networks (not shown) provided on the haul truck 18 that provide data sensing and reporting functionalities to facilitate the monitoring of the various haul truck components, states, and systems, as described herein. By way of example, such vehicle networks may include, but are not limited to, Local Interconnect Networks ("LIN," e.g., configured in accordance with ISO 1941 and ISO 17987); Controller Area Networks ("CAN," e.g., configured in accordance with ISO 11898); and "FlexRay" (e.g., configured in accordance with ISO 17458). A haul truck 18 may be provided with more than one vehicle network.

Before proceeding with the description, it should be noted that sensors suitable for monitoring the various components, systems, and states of the haul truck 18, are well-known in the art and are commonly provided as OEM equipment on a wide range of haul trucks 18. Therefore, the particular sensors that may be utilized in conjunction with the present invention will not be described in further detail herein.

Still referring to Figure 1, the system 10 may also comprise position sensing system 30. Position sensing system 30 may comprise one or more components operatively associated with haul truck 18 and that are also operatively associated with processing system 32, e.g., via network 34. The position sensing system 30 senses the position of the haul truck 18 as it operates within the mining operation 12. In the particular embodiments shown and described herein, the position sensing system 30 may comprise a satellite-based position sensing system that obtains position data from a constellation of satellites, such as those associated with the Global Positioning System (GPS), although other satellite-based position sensing systems are known and could be used instead. Alternatively, the position data may be obtained from other types of position sensing systems 30, such as from inertial sensing systems or ground-based radio navigation systems. Consequently, the present invention should not be regarded as limited to any particular type of sensing system 30.

Regardless of the particular types of state and position sensing systems 28 and 30 that may be utilized to sense the states and positions of the various haul trucks 18, the state and position sensing systems 28 and 30 may be operatively connected to processing system 32 via network system 34. Network system 34 may comprise a combination of wireless and wired networks in order to facilitate the transfer of information and data from the state and position sensing systems 28 and 30 to processing system 32. By way of example, in one embodiment, network system 34 may comprise a wireless network component (not separately shown) provided at the mining operation 12. Such a wireless network may comprise a first link or component of network system 34 and may be used to capture and relay information and data from the state and position sensing systems 28 and 30 to a local area network infrastructure (also not separately shown) provided at the mine. Thereafter, another wide area network system (not shown) may be used transfer and/or relay that information and data to a centralized network infrastructure (also not shown) which may be operatively associated with processing system 32. Of course, other variations and configurations of network system 34 are possible, as would become apparent to persons having ordinary skill in the art after having become familiar with the teachings provided herein. Therefore, the network system 34 shown and described herein should not be regarded as limited to any particular components, types, architectures, or configurations.

As regards the position sensing system 30, it may be desirable or advantageous to first process the data provided by the position sensing system 30 so that it may be more easily processed or handled by the processing system 32. **In** the particular embodiments shown and described herein, the position data provided by the position sensing system 30 may be processed in accordance with the teachings described in U.S. Patent Application Serial No. 16/167,989, filed on October 23, 2018, now U.S. Patent No. 10,712,448, entitled "Real-Time Correlation of Sensed Position Data with Terrestrial Features," which is commonly owned and which is specifically incorporated herein by reference for all that it discloses. Alternatively, the position data may be processed in accordance with the teachings described in U.S. Patent No. 10,002,109, entitled "Systems and Methods of Correlating Satellite Position Data with Terrestrial Features," which is also specifically incorporated herein by reference for all that it discloses.

Briefly, the systems and methods described in U.S. Patent No. 10,712,448 and in U.S. Patent No. 10,002,109 correlate sensed position data with surveyed data associated with a mine road network. The patent and patent application also describe systems and methods for "snapping" the position data to unique terrestrial features. In the context of the present invention, such a correlation allows the locations of the various haul trucks 18 to be readily correlated or snapped to known positions 66 on the road network 24, as best seen in Figure 4. The systems and methods described in the patent and patent application may be used to provide highly accurate and timely position data, typically within about 9 m (about 30 ft.) of the actual position of the haul truck 18. The position data are also updated at high frequency, typically once every second, thereby significantly improving the ability of the system and method of the present invention to accurately predict the various estimated times of arrival (ETAs) of haul trucks 18 traversing road network 24.

System 10 may also comprise a processing system 32. Processing system 32 may be operatively connected to the network system 34 so as to receive from the various haul truck sensing systems, e.g., state sensing system 28 and position or location sensing system 30, information and data relating to the state and position of each haul truck 18 in the manner already described. Processing system 32 may also be operatively connected to aspects and systems of the ore crusher 16 and shovel 22 in order to obtain certain information and data from those systems that are used by the systems and methods of the present invention. A display system 36 operatively connected to processing system 32 allows processing system 32 to display for one or more system operators (not shown) certain information and data relating to the operations described herein. Both processing system 32 and display system 36 may comprise any of a wide range of systems and devices that are now known in the art or that may be developed in the future that are or would be suitable for use with the present invention. However, because such systems are well-known in the art and could be readily provided by persons having ordinary skill in the art after having become familiar with the teachings provided herein, the particular processing and display systems 32 and 36 that may be utilized in conjunction with the present invention will not be described in further detail herein.

System 10 may also include a director 38 that is operatively associated with processing system 32. Director 38 is responsive to information and data produced by processing system 32 and may be used to direct or redirect the movement of at least one of the plurality of haul trucks 18 in order to minimize at least one of the estimated idle time and the time when the ore crusher 16 may be in the No-Material state. Director 38 may therefore comprise any of a wide range of systems and devices for accomplishing these tasks. For example, in one embodiment, director 38 may comprise an automated system configured to interface with a dispatch system (not shown) associated with the mining operation 12. The director 38 may issue instructions or commands to the dispatch system to provide the necessary instructions to the various haul trucks 18. In another embodiment, director 38 may operate independently of the dispatch system and provide the necessary instructions or commands to the haul trucks 18 directly. In still yet another embodiment, the director 38 may issue instructions or recommendations (e.g., via display system 36) to a human operator or supervisor (not shown) who could then issue the appropriate instructions or commands, either to the haul trucks 18 directly or via the dispatch system. In any event, because the particular configuration of the director 38 will be dependent on the particular dispatch and/or operational systems present in a given operation, and because any systems or devices required to integrate the functionality of the director 38 into the particular dispatch or operational systems in use could be readily provided by persons having ordinary skill in the art after having become familiar with the teachings provided herein, the particular systems and configurations comprising the director 38 that may be utilized in the present invention will not be described in further detail herein.

Processing system 32 may be configured or programmed to operate in accordance with methods described herein. The methods may be embodied in various software packages or modules provided on non-transitory computer-readable storage media accessible by processing system 32. The various software packages or modules are provided with computer-executable instructions that, when performed by processing system 32, cause the processing system 32 to process information and data in accordance with the various methods described herein.

Referring now to Figure 2, the various components and devices of system 10 may be configured or programmed to operate in accordance with method 44 to direct the movement of the haul trucks 18 between the loading area(s) 20 and the ore crusher(s) 16. In accordance with the teachings provided herein, the movement of the haul trucks 18 may be directed (or redirected) as necessary so as to minimize one or both of haul truck idle time and the time when the ore crusher 16 will be in the No-Material state.

The first step 46 of method 44 involves determining the locations of at least two, and preferably all, of the haul trucks 18 that are to be used to haul or convey the excavated ore 14 from the loading area(s) 20 to the ore crusher(s) 16 (or other destinations), as may be recommended or directed by the present invention. The location determination may involve determining whether the haul trucks 18 are located at the ore crusher 16, the loading area 20, or elsewhere. In one embodiment, the system 10 may determine the locations of the various haul trucks 18 in conjunction with the systems and methods described in U.S. Patent Application Serial No. 16/167,989 or U.S. Patent No. 10,002,109. As was already briefly described, the haul trucks 18 may be located with relatively high spatial and temporal resolutions (i.e., within about 9 m at a frequency of about once every second).

The next step 48 of method 44 involves determining the state of the located haul trucks 18. In the particular embodiment shown and described herein, the possible states of the haul trucks 18 are determined at least when the haul trucks 18 are located at ore crusher(s) 16 and the loading area(s) 20. Therefore, step 48 will only determine the state of the haul trucks 18 that are so located. That is, step 48 does not determine the state for haul trucks 18 that may be in-transit between the ore crusher 16 and loading area 20. In this regard, it should be noted that the determination of whether the haul trucks 18 are located at the ore crusher 16 and loading area 20 could be made based on location data obtained from the location sensing system 30 (e.g., GPS or inertial sensors) operatively associated with the haul trucks 18. Alternatively, the determination of whether the haul trucks 18 are located at the ore crusher 16 or the loading area 20 could be obtained from the mine dispatch system (not shown). Whether the location data are obtained from the truck position sensing system 30 or the mine dispatch system would depend to some degree on the operator preference and the particular functionalities provided by the mine dispatch system.

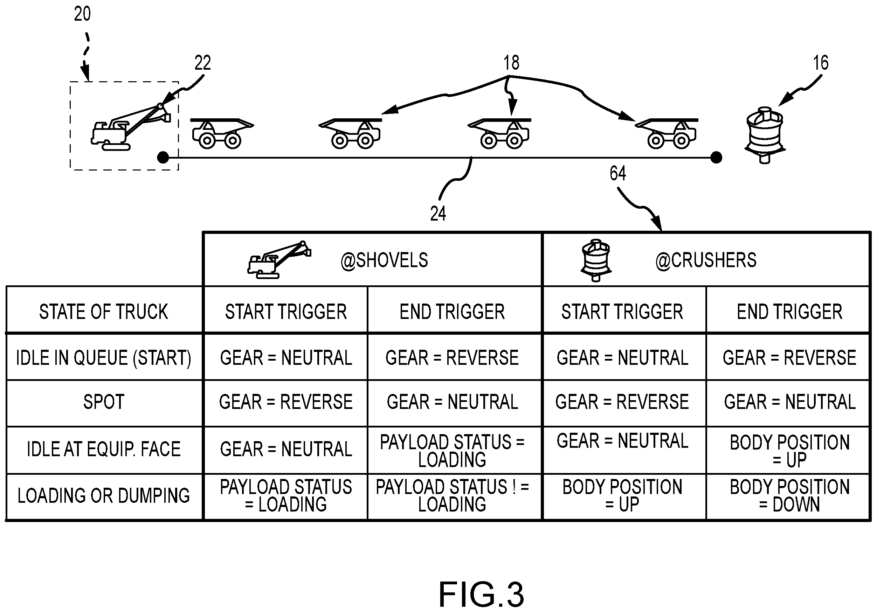

With reference now to Figure 3, the state of each haul truck 18 located at the ore crusher 16 and loading area 20 may be determined from the state sensing system 28 (Figure 1) operatively associated with the haul trucks 18. More particularly, the information and data provided by the various haul truck system sensors (not shown) comprising the state sensing system 28 may be used in conjunction with the state matrix 64 depicted in Figure 3 in order to determine the state of the haul truck 18. The state of each haul truck 18 is determined in conjunction with a Start Trigger and End Trigger for each defined haul truck state. For example, and with reference specifically to Figure 3, for a haul truck 18 located at either the loading area 20 (e.g., at shovel 22) or the ore crusher 16, the Idle in Queue state is initiated or started when the haul truck transmission is shifted to neutral (i.e., the Start Trigger) and is deemed to be terminated or ended when the transmission is shifted to reverse (i.e., the End Trigger). The remaining haul truck states, i.e., Spot, Idle at Equipment Face, Loading, and Dumping state, are determined in accordance with the respective Start and End Triggers for the respective states, as set forth in state matrix 64 illustrated in Figure 3.

Once the locations and states of the various haul trucks 18 have been determined, method 44 may then proceed to step 50 in which the system 10 predicts at least the estimated time of arrival (ETA) at the ore crusher 16 for loaded haul trucks 18 that are in-transit to the ore crusher 16. With reference now primarily to Figure 4, in one embodiment, the system 10 makes the ETA prediction based on the "snapped" location of the haul truck 18 to the nearest (e.g., within 9 m) defined location or snap point 66 on the mine road network 24. The system 10 then uses that snap point 66 to predict the ETA based on several factors, as will be described in greater detail below.

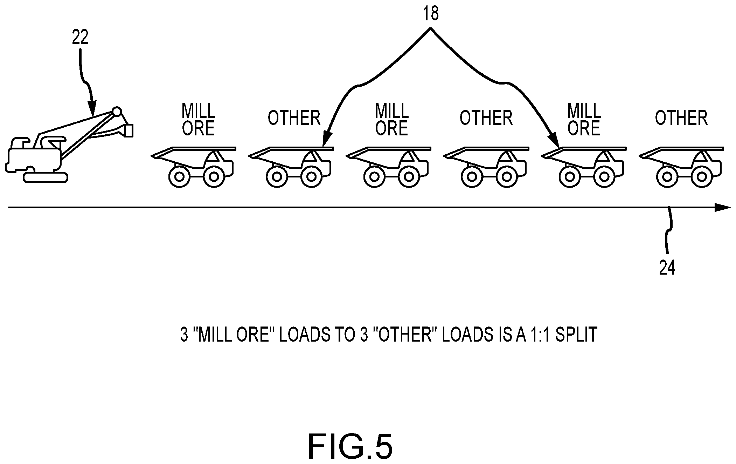

In some embodiments, method 44 may involve optional steps 47 and/or 49 (Figure 2) that may be conducted before performing step 50. Optional step 47 may involve determining a shovel "split." In certain applications, the excavated ore 14 may predominantly comprise a plurality of defined material types. Depending on the material type loaded into each haul truck 18, the system and method of the present invention will determine a material split for each shovel 22 loading excavated material 14 into each haul truck 18. For example, and with reference now primarily to Figure 5, the defined material types may be "Mill Ore," "Crushed Leach," and "Other." "Other" material types may comprise "Waste," "ROM (run of mine) Leach," and "Unknown" material types. The particular defined material type may be collected or obtained by system 10 from the mine dispatch system (not shown), which may be provided with the particular material type by a system operator (not shown). Step 47 determines the shovel split by calculating the percentages of material types (e.g., as derived from the mine dispatch system) for a predetermined number (e.g., 6) haul trucks 18 loaded by shovel 22. For example, three Mill Ore loads to three Other loads is a 1:1 split, as depicted in Figure 5.

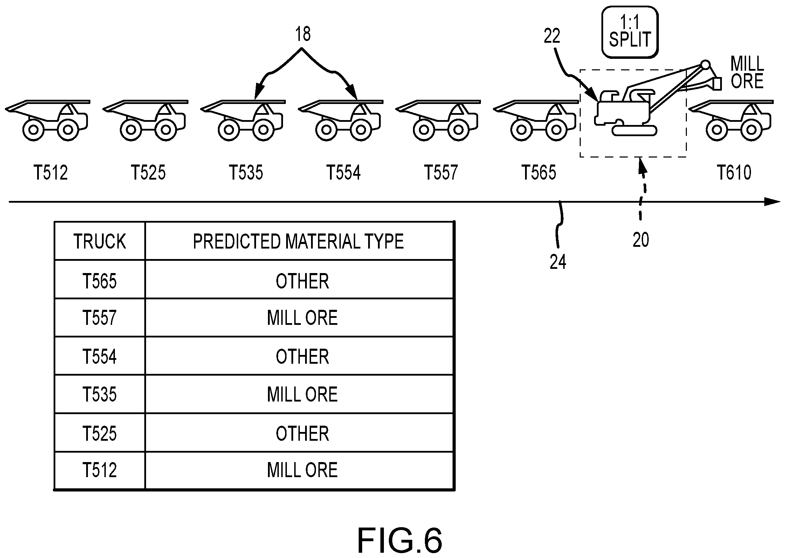

The material split for each shovel 22 may be used in step 49 to predict the dumping location for empty haul trucks 18, i.e., in advance of loading. For example, and with reference now to Figure 6, in an embodiment wherein the system and method have determined (in step 47) that there is a 1:1 split between Mill Ore and Other (Figure 5), then step 49 may use that determined split to predict a destination for each empty haul truck 18 awaiting loading by shovel 22. For example, if most recent haul truck 18 to be loaded, e.g., haul truck T610 in Figure 6, was loaded with Mill Ore, then the next haul truck 18 to be loaded, e.g., haul truck T565, will be predicted to be loaded with material type "Other," because of the 1:1 split determined in step 47. If haul trucks 18 loaded with material type "Other" are to be directed to a destination other than the crusher 16, then step 49 will predict the appropriate dump location for truck T565. The remaining haul trucks 18 in the queue, e.g., haul trucks T557, T554, T535, T525, and T512, are predicted to be loaded with the material types listed in Figure 6.

As will be described in greater detail below, the systems and methods of the present invention may then use the predicted material type and, thus destination of the loaded haul truck 18, in order to provide a more accurate prediction of the ETA at the crusher 16 (i.e., haul trucks 18 directed to an alternate destination will not appear at the crusher 16) and, of course, the number of haul trucks 18 that will be located at the crusher 16 at one or more future times.

As already mentioned, step 50 predicts the ETAs of the in-transit loaded haul trucks 18. If optional steps 47 and 49 are used, step 50 will also take into account the fact that some of the loaded haul trucks 18 may be directed to a destination other than the crusher 16. For haul trucks 18 that are destined for the ore crusher 16, the ETA calculated or determined during step 50 is based on a number of factors, depending on the current location of the haul truck 18. For example, and with reference back now to Figure 4, for empty haul trucks 18 traveling to the loading area 20, the ETA determined during step 50 will be based on the historical travel time from the snap point 66 on the road 24 to the loading area 20, the historical time the haul truck 18 remains at the loading area (e.g., based on historical Idle in Queue, Spot, Idle at Equipment Face, and Loading times at the shovel 22), and the historical travel time from the shovel 22 to the crusher 16. For haul trucks 18 at the loading area 20, the ETA may be based on the estimated time remaining at the shovel 22 plus the historical travel time from the shovel 22 to the crusher 16. For loaded haul trucks 18 that are in-transit from the shovel 22 to the crusher 16, the ETA may be based on the historical travel time from the current snap point 66 to the ore crusher 16.

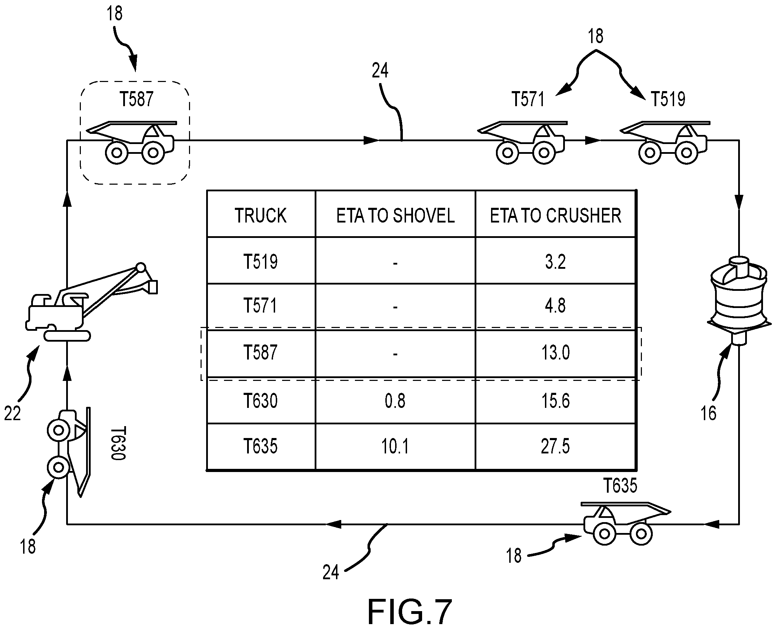

In the particular embodiments shown and described herein, the particular historical times used (i.e., either travel times from particular snap points or times remaining for the particular state(s) at the shovel loading area 20) may be the median times determined for each respective event during some prior period of time, e.g., from the prior day or even the prior shift. Thereafter, the ETA for each haul truck 18 may be updated each time the haul truck 18 reaches the next consecutive stage (e.g., state at the shovel loading area 20) or snap point 66. The use of historical data and the ability to update the ETA each time the haul truck 18 reaches the next consecutive stage, event, or snap point 66 significantly increases the accuracy and reliability of the ETA because it is based on actual operational experience, i.e., the same type of haul truck 18 traveling on the same mine road 24, rather than on some theoretical or hoped-for ideal travel time. If desired, the ETA for traveling trucks may be displayed in tabular form on display system 36, as best seen in Figure 7.

More specifically, and for the specific example situation illustrated in Figure 7, the ETA for the haul truck 18 nearest the crusher 16 (e.g., truck T519) is 3.2 minutes, whereas the ETA for truck T571 is 4.8 minutes. The ETA for loaded truck T587 just leaving shovel 22 is 13.0 minutes. The system and method of the present invention may also display respective ETAs for empty haul trucks 18 to arrive at shovel 22, and thence (after loading) to crusher 16. For example, truck T630 is estimated to arrive at the shovel 22 in 0.8 minutes. The subsequent ETA at the crusher for truck T630 is 15.6 minutes, which includes the estimated times required to cycle through the various states at the shovel 22 (i.e., the Idle in Queue, Spot, Idle at Equipment Face, and Loading times), as well as the estimated time to travel from the shovel 22 to the crusher 16. The ETAs for truck T635 are estimated to be 10.1 minutes and 27.5 minutes to the shovel 22 and crusher 16, respectively. Again, the various ETAs are updated continuously by the systems and methods of the present invention.

The ETAs of the haul trucks 18 are then used to predict, at step 52, the number of loaded haul trucks 18 that will be at the ore crusher 16 at one or more future times. In one embodiment, the process of step 52 uses as input data the ETA for each haul truck 18 (e.g., as determined in step 50), the number of haul trucks 18 currently at the crusher 16, as well as the dumping location that empty haul trucks 18 are expected (i.e., predicted) to travel to based on the expected material type (e.g., as determined in optional steps 47 and 49). The output data produced by step 52 may include the total number of haul trucks 18 that are currently at the crusher 16, the predicted haul truck activity at the crusher (e.g., based on the ETA and the total idle time). Step 52 will also produce as an output the predicted intervals where no haul trucks 18 are expected to be at the crusher 16.

If desired, optional step 53 may use the output data produced by step 52 to generate the prediction window 40, which may be displayed on display system 36. See Figure 8. In an embodiment wherein the predictions are made at least once every minute, the output data produced by step 52 may be depicted in prediction window 40 as a graph or plot 68 of the total number of haul trucks 18 (on the vertical axis 70) expected to be at the ore crusher 16 at various future times (on the horizontal axis 72) on a minute-by-minute basis. In one embodiment, the system and method of the present invention may predict the number of haul trucks 18 that will be at the crusher 16 up to 30 minutes in the future.

Prediction window 40 may also provide an indication of some defined maximum number of haul trucks 18 that is preferred not to be exceeded at the particular crusher 16. Such a preferred maximum number of haul trucks 18 may be depicted in prediction window 40 as a dashed horizontal line 74. In the particular embodiment illustrated in Figure 8, the preferred maximum number of haul trucks 18 is four. Alternatively, other preferred maximum numbers may be used depending on the particular operation, as would become apparent to persons having ordinary skill in the art after having become familiar with the teachings provided herein. Consequently, the present invention should not be regarded as limited to any particular preferred maximum number of haul trucks 18.

Prediction window generation step 53 may provide a visual indication (e.g., shading 76) of the prediction window 40 for those future times when the number of haul trucks 18 at the crusher 16 is predicted to exceed the preferred maximum number (e.g., as indicated by dashed line 74) of haul trucks 18. Step 53 may also provide visual indication (e.g., shading 78) of the prediction window 40 for those future times when the number of haul trucks 18 at the crusher 16 is expected to fall to zero. Such visual indications, e.g., shading 76, 78, will allow system operators (not shown) to readily identify situations where too many or too few haul trucks 18 are predicted to be at the crusher 16 at one or more future times.

Having determined the predicted number of haul trucks 18 that will be located at the crusher 16 at one or more future times, a next step 54 (Figure 2) in method 44 involves estimating the idle time at least for haul trucks 18 at the crusher 16. The estimated idle time may be based on the position of the haul truck 18 at the crusher 16 (i.e., the position in the queue) and the time required for each haul truck 18 to cycle though the various states, i.e., the Idle in Queue, Spot, Idle at Equipment Face, and Dumping states. See Figure 3. In one embodiment, the estimated idle time for each haul truck 18 may be determined from historical data collected from some prior operational period (e.g., from the prior shift or the prior day) for the particular crusher 16. Step 54 may also estimate the idle times for trucks 18 at the loading area 20 based on the location of the haul truck 18 at the loading area 20 (i.e., the position in the queue) as well as the time required for each haul truck 18 to cycle through the various states, i.e., Idle in Queue, Spot, Idle at Equipment Face, and Loading states. In one embodiment, the estimated idle time may be determined from historical data for the particular loading area 20.

The next step 56 of method 44 predicts when the ore crusher 16 will be in the No-Material state. Step 56 may also predict when the crusher 16 will be in a Closed state. When the crusher 16 is in the No-Material state, the surge bin 58 located below the crusher 16 will predicted to be exhausted of crushed ore 62 before the next load of excavated ore 14 will be dumped into the feed bin 26 (Figure 1). That is, no crushed ore 62 will be fed to conveyor system 27. When the crusher 16 is in the Closed state, the surge bin 58 will be predicted to be overfilled with crushed ore 62 if the next load of excavated ore is dumped into the feed bin 26. If the crusher 16 is in neither the No-Material state nor the Closed state, then crusher 16 is deemed to be in an Accepting Material state.

Step 56 predicts the future state of the crusher 16 based on certain information and data relating to the crusher 16 and surge bin 58, including the crush out time, the surge bin level, and the surge bin capacity. For example, and with reference now to Figure 9, surge bin 58 is located below crusher 16 and defines an inlet end 80 and an outlet end 82. Inlet end 80 of surge bin 58 receives crushed ore 62 from crusher 16 (not shown in Figure 9). Outlet end 82 discharges crushed ore 62 to conveyor system 27. Outlet end 82 is generally configured to discharge crushed ore 62 at a rate commensurate with a haulage rate associated with conveyor system 27. In this manner, surge bin 58 ensures that conveyor system 27 is not overloaded (or underloaded) with crushed material 62 discharged by crusher 16. Sensors (not shown) associated with surge bin 58 may detect the level 61 of crushed ore 62 within surge bin 58. The surge bin sensors are operatively connected to processing system 32 so that processing system 32 can determine the level 61 of crushed ore 62 contained in surge bin 58 during operation. Surge bin sensors of the type disclosed herein are well-known in the art, thus will not be described in further detail herein.

Again, step 56 predicts the No-Material state based on the level 61 of ore 62 in surge bin 58, the crush out time, and the surge bin capacity. The crush out time is the time required by the crusher 16 to crush the excavated ore 14 discharged by a haul truck 18. The surge bin capacity is the capacity, typically measured in tons, of the surge bin 58. In this regard, the present invention establishes Low, Operating, and High limits, 84, 86, and 88, respectively, for the level 61 of crushed material 62 existing within surge bin 58. See Figure 9. The Low limit 84 is that level 61 of crushed material 62 required to maintain a material bed 90 in the outlet end 82 of surge bin 58. If the level 61 of crushed material 62 drops below the Low limit 84, the crusher control system (not shown), will shut down the apron feeder (also not shown) to maintain the material bed 90, thereby protecting the apron feeder from damage. In one embodiment, the Low limit 84 is selected to be about 5% of the surge bin capacity.

The Operating limit 86 represents that level 61 of crushed ore 62 that will allow the surge bin 58 to accommodate crushed ore 62 produced by crusher 16 from the load carried by a single haul truck 18. That is, if the entire load of a single haul truck 18 is dumped into feed bin 26 (Figure 1) of crusher 16 when the level 61 of crushed material 62 is at or below the Operating limit 86, the surge bin 58 will be able to accept the crushed ore 62 resulting from the entire load without exceeding the High limit 88. The Operating limit 86 is therefore related to the crush out time, the discharge rate of the surge bin 58, and the capacity of the haul truck 18. In one embodiment, the Operating limit 86 is selected to be about 60% of the surge bin capacity.

The High limit 88 represents that level 61 of crushed ore 62 above which the crusher control system (not shown) will shut-down the crusher 16 to avoid floating the mantle. **In** one embodiment, the High limit 88 is selected to be about 80% of the surge bin capacity.

As mentioned, step 56 predicts the state of the crusher 16 at one or more future times based on the predicted number of haul trucks 18 at the crusher 16 as well as the level 61 of the crushed material 62 predicted to be in the surge bin 58 at the future times. These predictions, in conjunction with the estimated idle times predicted in step 54, may be used in step 63 to direct the movement of the haul trucks 18 to minimize the idle time and/or the time when the crusher 16 will be in the No-Material state. For example, the system and method of the present invention may tolerate a no-truck condition at the crusher 16 at some future time so long as the crusher is not predicted to be in the No-Material state before the predicted arrival of the next haul truck 18. However, if the no-truck condition will extend for a period of time sufficient to also allow the crusher 16 to enter the No-Material state before the predicted arrival of the next haul truck 18, then the director 38 may direct that the crusher 16 be fed instead from the crusher stockpile 60 (Figure 1). Alternatively, the director 38 may direct (or redirect) one or more haul trucks 18 so that the predicted No-Material state can be avoided, or at least minimize the duration of the No-Material state. On the other hand, if too many haul trucks 18 are predicted to be at the crusher 16 at some future time, the director 38 may redirect one or more haul trucks 18 to other locations so as to minimize the idle time for haul trucks 18 at the crusher 16.

Referring back now to Figures 2 and 8, and 10 simultaneously, in some embodiments method 44 may include an optional step 92 of determining the event horizon cut-off 42 for the prediction window 40 (Figure 8). As mentioned, the event horizon cut-off 42 represents that future time (e.g., in minutes) beyond which the prediction of the number of haul trucks 18 at the crusher 16 (or alternatively at the loading area 20) may be below a defined level of confidence or reliability. With reference now primarily to Figure 10, the event horizon cut-off 42 may be determined empirically by comparing the predicted number 94 of haul trucks 18 with actual number 96 of haul trucks 18, both during a previous operational period (e.g., the prior day or prior shift). For example, if the deviation between the predicted number 94 during the previous period (e.g., the prior day) and the actual number 96 during the previous period exceeded some defined level (e.g., an error in the prediction that exceeds 2 haul trucks 18) at some defined point in the future (e.g., 25 minutes), then the system may place the event horizon cut-off 42 at the 25 minute mark.

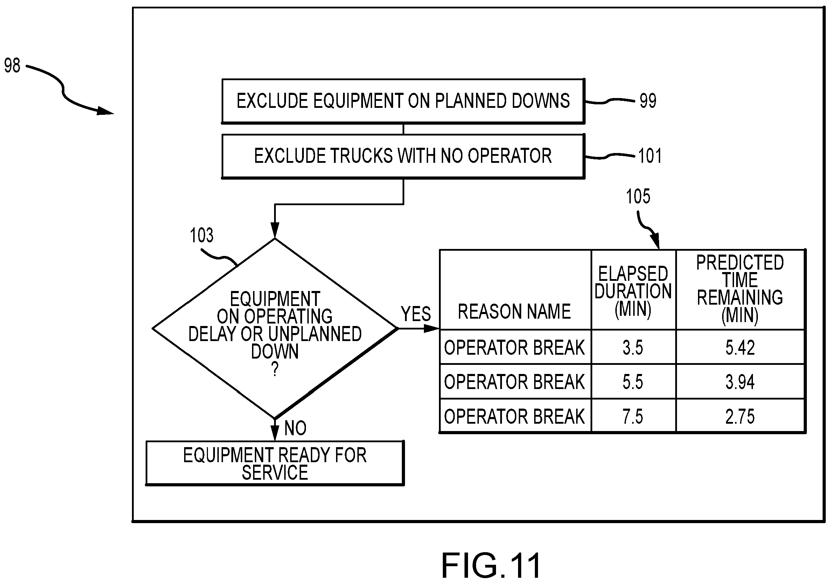

Referring back now to Figure 2, method 44 may also be provided with an additional step 98 to identify equipment that is in a Down state or Delayed state and predict the time remaining for each respective state. Optional step 98 may be performed at any convenient place within method 44, as would become apparent to persons having ordinary skill in the art after having become familiar with the teachings provided herein. In one embodiment, optional step 98 maybe performed before step 46. Referring now to Figure 11, step 98 determines the real-time status of the crusher 16, the haul trucks 18, and the shovel 22. The real-time status of the haul trucks 18 and shovel 22 may be determined from the mine dispatch system (not shown), as most mine dispatch systems will have such information and data. The real-time status of the crusher 16 may be determined from the crusher control system (not shown) or a 'downtime reporter' system (also not shown) that may be operatively associated with the crusher 16. Regardless of the particular systems used, the various systems for reporting the real-time status of the various pieces of equipment, e.g., crusher 16, haul trucks 18, and shovel 22, may be operatively connected to the processing system 32, e.g., via network 34.

Once the real-time status of the various pieces of equipment has been ascertained, the method 44 then excludes, at step 99 (Figure 11) equipment that is on planned 'downs' or is otherwise out of service. Such planned 'downs' can include, for example, equipment that is undergoing scheduled maintenance or is scheduled to be idled due to the requirements of the particular shift (e.g., a reduced shift), or for other reasons that are known in advance. A next step 101 excludes haul trucks 18 that have no operator. A common reasons for excluding haul trucks 18 that have no operator include, but is not limited to, shift changes, scheduled breaks, or the requirements of the particular shift. After having excluded such equipment, the method 44 proceeds to step 103 to determine which, if any, of the operating equipment is operating on a delay or an unplanned 'down.' Equipment operating on such a delay or unplanned down is deemed to be in the Delay state. If no such equipment is identified at step 103 as being in the Down or Delayed states, the system and method report that all equipment is ready for service. In such an instance, no additional steps or compensations need to be made in the overall method 44 to minimize at least one of the estimated idle time and the time when the continuous material processor will be in the No-Material state.

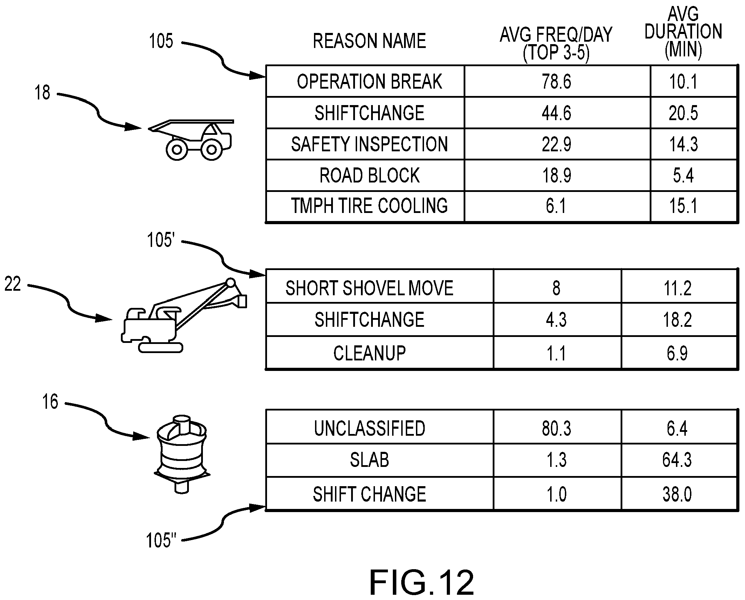

If, on the other hand, one or more pieces of equipment are identified at step 103 to be in the Down or Delayed states, the system and method then proceeds to step 105 to predict, using a delay table 105, an estimated time remaining for the corresponding Down or Delayed state. With reference now to Figure 12, the system and method of the present invention may maintain delay tables 105, 105' and 105" for each of equipment, e.g., crusher(s) 16, haul trucks 18, and shovel(s) 22, respectively. Delay tables 105, 105' and 105" may include information relating to the particular reason for the Down or Delayed state, as well as corresponding historical data for the duration (e.g., in minutes) associated with the particular state. For example, for the particular tables 105, 105' and 105" illustrated in Figure 12, historical data for haul trucks 18 listed in table 105 include five separate reasons for the Delay state (e.g., "Operator Break," "Shift Change," "Safety Inspection," "Road Block," and "Tire Cooling." Table 105 for haul trucks 18 may also include a listing of the average frequency or daily occurrences of such delays and the average duration (in minutes) of such delays. For shovels 22, the reasons may include "Short Shovel Move," "Shift Change," and "Cleanup," as listed in delay table 105'. Table 105' may also list the average frequency or the number of daily occurrences of such delays and the average duration of such delays. The reasons for crusher downtime may include "Unclassified," "Slab," and "Shift Change," also with a listing of the average frequency or the number of daily occurrences of such delays and the average duration of such delays, as listed in delay table 105".

Thus, once the system 10 identifies the reason for the particular Down or Delay state for any given piece of equipment, step 98 may provide an estimate of the time remaining based on when the unexpected delay occurred and the historical average delay associated with the reported reason. The estimate of the time remaining may then be used to minimize at least one of the estimated idle time and the time when the continuous material processor will be in the No-Material state.

Having herein set forth preferred embodiments of the present invention, it is anticipated that suitable modifications can be made thereto which will nonetheless remain within the scope of the invention. The invention shall therefore only be construed in accordance with the following claims:

## Claims

1. A computer-implemented method (44) of directing the movement of a plurality of batch delivery systems (18) delivering material (14) from at least one loading area (20) to at least one continuous material processor (16), comprising:
determining a location (46) of each of at least two of the plurality of batch delivery systems (18);
determining a state (48) of each of the located batch delivery systems (18);
**characterized by**:
predicting an estimated time of arrival (50) at the continuous material processor (16) of each of the at least two of the plurality of batch delivery systems, wherein:
at least one of the at least two of the plurality of batch delivery systems is a loaded batch delivery system (18) in transit from the loading area (20) to the continuous material processor (16), and
at least another of the at least two of the plurality of batch delivery systems is an empty batch delivery system (18) in transit to the loading area (20) and then, after loading, in transit from the loading area (20) to the continuous material processor (16);
predicting a total number (52) of loaded batch delivery systems (18) that will be located at the continuous material processor (16) at a future time based on at least the predicted estimated times of arrival of each of the at least two of the plurality of batch delivery systems (18);
estimating an idle time (54) for at least one of the predicted total number of loaded batch delivery systems (18) that will be located at the continuous material processor (16) at the future time;
predicting a time (56) when the continuous material processor (16) will be in a No-Material state; and
directing the movement (63) of at least one of the plurality of batch delivery systems (18) based on the predicted total number of loaded batch delivery systems (18) that will be located at the continuous material processor (16) at the future time to minimize at least one of the estimated idle time and the time when the continuous material processor (16) will be in the No-Material state.

2. The method (44) of claim 1, wherein said directing the movement (63) of at least one of the plurality of batch delivery systems (18) further comprises directing the movement (63) of at least one of the plurality of batch delivery systems (18) to minimize both the estimated idle time and the time when the continuous material processor (16) will be in the No-Material state.

3. The method (44) of claim 2, wherein said directing (63) comprises assigning a destination to at least one of the loaded batch delivery systems (18).

4. The method (44) of claim 1, wherein said directing (63) comprises assigning a destination to at least one of the empty batch delivery systems (18).

5. The method (44) of any one of claims 1-4, further comprising directing the movement (63) of at least one of the batch delivery systems (18) to prevent the predicted total number of loaded batch delivery systems (18) at the continuous material processor (16) from exceeding a defined number at the future time.

6. The method (44) of any one of claims 1-5, wherein said predicting (56) when the continuous material processor (16) will be in the No-Material state comprises predicting a level (61) of a surge bin (56) operatively associated with the continuous material processor (16).

7. The method (44) of any one of claims 1-6, further comprising predicting when the continuous material processor (16) will be in an Accepting Material state.

8. The method (44) of claim 7, wherein said predicting when the continuous material processor (16) will be in the Accepting Material state comprises predicting a level (61) of a surge bin (58) operatively associated with the continuous material processor (16).

9. The method (44) of any one of claims 1-8, further comprising:
determining when at least one of the plurality of batch delivery system (18) is in at least one of a Down state or a Delayed state; and
predicting a time remaining in the at least one of the Down state or the Delayed state.

10. The method (44) of claim 9 wherein said predicting the time remaining in the at least one of the Down state or the Delayed state is based on historical data.

11. The method (44) of any one of claims 1-10, further comprising:
predicting a dump location for at least one empty batch delivery system (18) in transit to the loading area (20); and
wherein said predicting the total number of loaded batch delivery systems (18) that will be located at the continuous material processor (16) at the future time is based on the predicted dump location for the at least one empty batch delivery system (18) in transit to the loading area (20).

12. The method (44) of claim 11, wherein said predicting the dump location further comprises predicting a material type to be loaded into the empty batch delivery system (18) at the loading area (20), the predicted dump location being based on the predicted material type.

13. The method (44) of claim 12, further comprising:
determining a material type actually loaded into the empty batch delivery system (18);
assigning a destination to the loaded batch delivery system (18) based on the material type actually loaded; and
wherein said predicting the total number of loaded batch delivery systems (18) that will be located at the continuous material processor (16) at the future time is based on the assigned destination of the loaded batch delivery system (18).

14. The method (44) of any one of claims 1-13, further comprising:
generating (53) a prediction window (40), said prediction window (40) including at least a prediction of the total number of loaded batch delivery systems (18) at the continuous material processor (16) at each of a plurality of future times; and
determining (92) an event horizon cutoff (42) for the prediction window (40).

15. The method (44) of any one of claims 1-14, wherein the state (48) of each of at least two of the plurality of batch delivery systems (18) comprises one or more selected from the group consisting of an Idle in Queue state, a Spot state, an Idle at Equipment Face state, a Loading state, and a Dumping state.

16. A system (10) for directing the movement of a plurality of batch delivery systems (18) delivering material (14) from at least one loading area (20) to at least one continuous material processor (16), comprising:
a network (34);
a plurality of sensors (28, 30) operatively associated with each of said plurality of batch delivery systems (18) and said network (34), said plurality of sensors (28, 30) configured to sense at least a position and a state (48) of each of the plurality of batch delivery systems (18);
a processing system (32) operatively associated with said network (34), said processing system (32) being configured to:
determine a location (46) of each of at least two of the plurality of batch delivery systems (18);
determine a state (48) of each of the located batch delivery systems (18);
the system (10) being **characterized by** the processing system (32) being configured to:
predict an estimated time of arrival (50) at the continuous material processor (16) of each of the at least two of the plurality of batch delivery systems, wherein:
at least one of the at least two of the plurality of batch delivery systems is a loaded batch delivery system (18) in transit from the loading area (20) to the continuous material processor (16), and
at least another of the at least two of the plurality of batch delivery systems is an empty batch delivery system (18) in transit to the loading area (20) and then, after loading, in transit from the loading area (20) to the continuous material processor (16);
predict a total number (52) of loaded batch delivery systems (18) that will be located at the continuous material processor (16) at a future time based on at least the predicted estimated times of arrival of each of the at least two of the plurality of batch delivery systems (18);
estimate an idle time (54) for at least one of the predicted total number (52) of loaded batch delivery systems (18) that will be located at the continuous material processor (16) at the future time; and
predict a time (56) when the continuous material processor (16) will be in a No-Material state; and
a director (38) operatively associated with said plurality of batch delivery systems (18) and said processing system (32), said director (38) configured to direct the movement of at least one of the plurality of batch delivery systems (18) based on the predicted total number of loaded batch delivery systems (18) that will be located at the continuous material processor (16) at the future time to minimize at least one of the estimated idle time and the time when the continuous material processor (16) will be in the No-Material state.

17. A computer program product comprising instructions which, when the computer program product is executed by a computer, cause the computer to carry out the steps of the method of any one of claims 1-15.

## Patentansprüche

1. Computerimplementiertes Verfahren (44) zum Lenken der Bewegung einer Vielzahl von Chargenliefersystemen (18), die Material (14) von mindestens einem Ladebereich (20) zu mindestens einem Endlosmaterialprozessor (16) liefern, umfassend:
Bestimmen eines Standorts (46) von jedem von mindestens zwei der Vielzahl von Chargenliefersystemen (18);
Bestimmen eines Zustands (48) von jedem der lokalisierten Chargenliefersysteme (18);
**gekennzeichnet durch**:
Vorhersagen einer geschätzten Ankunftszeit (50) bei dem Endlosmaterialprozessor (16) von jedem der mindestens zwei der Vielzahl von Chargenliefersystemen, wobei:
mindestens eines der mindestens zwei der Vielzahl von Chargenliefersystemen ein beladenes Chargenliefersystem (18) ist, das sich auf dem Weg vom Ladebereich (20) zum Endlosmaterialprozessor (16) befindet, und
mindestens ein weiteres der mindestens zwei der Vielzahl von Chargenliefersystemen ein leeres Chargenliefersystem (18) ist, das sich auf dem Weg zum Ladebereich (20) und dann, nach dem Laden, auf dem Weg vom Ladebereich (20) zum Endlosmaterialprozessor (16) befindet;
Vorhersagen einer Gesamtzahl (52) beladener Chargenliefersysteme (18), die sich zu einem zukünftigen Zeitpunkt am Endlosmaterialprozessor (16) befinden werden, basierend auf mindestens den vorhergesagten geschätzten Ankunftszeiten jedes der mindestens zwei der Vielzahl von Chargenliefersystemen (18);
Schätzen einer Leerlaufzeit (54) für mindestens eines der vorhergesagten Gesamtzahl beladener Chargenliefersysteme (18), die sich zu dem zukünftigen Zeitpunkt am Endlosmaterialprozessor (16) befinden werden;
Vorhersagen eines Zeitpunkts (56), zu dem sich der Endlosmaterialprozessor (16) in einem Zustand "Kein Material" befinden wird; und
Leiten der Bewegung (63) von mindestens einem der Vielzahl von Chargenliefersystemen (18) auf der Grundlage der vorhergesagten Gesamtzahl geladener Chargenliefersysteme (18), die sich zu dem zukünftigen Zeitpunkt am Endlosmaterialprozessor (16) befinden werden, um mindestens die geschätzte Leerlaufzeit und die Zeit, zu der sich der Endlosmaterialprozessor (16) im Zustand "Kein Material" befinden wird, zu minimieren.

2. Verfahren (44) nach Anspruch 1, wobei das Lenken der Bewegung (63) von mindestens einem der Vielzahl von Chargenliefersystemen (18) ferner das Lenken der Bewegung (63) von mindestens einem der Vielzahl von Chargenliefersystemen (18) umfasst, um sowohl die geschätzte Leerlaufzeit als auch die Zeit, in der sich der Endlosmaterialprozessor (16) im Zustand "Kein Material" befindet, zu minimieren.

3. Verfahren (44) nach Anspruch 2, wobei das Leiten (63) die Zuweisung eines Ziels an mindestens eines der beladenen Chargenliefersysteme (18) umfasst.

4. Verfahren (44) nach Anspruch 1, wobei das Leiten (63) die Zuweisung eines Ziels an mindestens eines der leeren Chargenliefersysteme (18) umfasst.

5. Verfahren (44) nach einem der Ansprüche 1 bis 4, ferner umfassend das Lenken der Bewegung (63) von mindestens einem der Chargenliefersysteme (18), um zu verhindern, dass die vorhergesagte Gesamtanzahl beladener Chargenliefersysteme (18) am Endlosmaterialprozessor (16) zum zukünftigen Zeitpunkt eine definierte Zahl überschreitet.

6. Verfahren (44) nach einem der Ansprüche 1 bis 5, wobei das Vorhersagen (56), wann der Endlosmaterialprozessor (16) sich im Zustand "Kein Material" befinden wird, das Vorhersagen eines Füllstands (61) eines Vorratsbehälters (56) umfasst, der operativ mit dem Endlosmaterialprozessor (16) verbunden ist.

7. Verfahren (44) nach einem der Ansprüche 1 bis 6, das ferner das Vorhersagen umfasst, wann der Endlosmaterialprozessor (16) sich im Zustand "Material annehmen" befinden wird.

8. Verfahren (44) nach Anspruch 7, wobei das Vorhersagen, wann der Endlosmaterialprozessor (16) sich im Zustand "Material annehmen" befinden wird, das Vorhersagen eines Füllstands (61) eines Vorratsbehälters (58) umfasst, der operativ mit dem Endlosmaterialprozessor (16) verbunden ist.

9. Verfahren (44) nach einem der Ansprüche 1 bis 8, ferner umfassend:
Bestimmen, wann sich mindestens eines der mehreren Chargenliefersysteme (18) in mindestens einem von "Aus-Zustand" oder "verzögertem Zustand" befindet; und
Vorhersagen einer verbleibenden Zeit in mindestens einem von "Aus-Zustand" oder "verzögertem Zustand".

10. Verfahren (44) nach Anspruch 9, wobei das Vorhersagen der verbleibenden Zeit in mindestens einem von "Aus-Zustand" oder "verzögertem Zustand" auf historischen Daten basiert.

11. Verfahren (44) nach einem der Ansprüche 1 bis 10, ferner umfassend:
Vorhersagen eines Abladeorts für mindestens ein leeres Chargenliefersystem (18) auf dem Weg zum Ladebereich (20); und
wobei das Vorhersagen der Gesamtzahl beladener Chargenliefersysteme (18), die sich zu einem zukünftigen Zeitpunkt am Endlosmaterialprozessor (16) befinden werden, auf dem vorhergesagten Abladeort für das mindestens eine leere Chargenliefersystem (18) auf dem Weg zum Ladebereich (20) basiert.

12. Verfahren (44) nach Anspruch 11, wobei das Vorhersagen des Abladeorts ferner das Vorhersagen eines Materialtyps umfasst, der in das leere Chargenliefersystem (18) im Ladebereich (20) geladen werden soll, wobei der vorhergesagte Abladeort auf dem vorhergesagten Materialtyp basiert.

13. Verfahren (44) nach Anspruch 12, ferner umfassend:
Bestimmen eines tatsächlich in das leere Chargenliefersystem (18) geladenen Materialtyps;
Zuweisen eines Ziels zu dem geladenen Chargenliefersystem (18) basierend auf dem tatsächlich geladenen Materialtyp; und
wobei das Vorhersagen der Gesamtzahl der geladenen Chargenliefersysteme (18), die sich zu einem zukünftigen Zeitpunkt am kontinuierlichen Materialprozessor (16) befinden werden, auf dem zugewiesenen Ziel des geladenen Chargenliefersystems (18) basiert.

14. Verfahren (44) nach einem der Ansprüche 1 bis 13, ferner umfassend:
Erzeugen (53) eines Vorhersagefensters (40), wobei das Vorhersagefenster (40) mindestens eine Vorhersage der Gesamtzahl der geladenen Chargenliefersysteme (18) am kontinuierlichen Materialprozessor (16) zu jedem einer Vielzahl zukünftiger Zeitpunkte umfasst; und
Bestimmen (92) eines Ereignishorizont-Grenzwerts (42) für das Vorhersagefenster (40).

15. Verfahren (44) nach einem der Ansprüche 1 bis 14, wobei der Zustand (48) von jedem von mindestens zwei der Vielzahl von Chargenliefersystemen (18) einen oder mehrere Zustände umfasst, die ausgewählt sind aus der Gruppe bestehend aus einem "Leerlaufzustand in der Warteschlange", einem "Spotzustand", einem "Leerlaufzustand bei Ausrüstungsfläche", einem "Ladezustand" und einem "Entladezustand".

16. System (10) zum Lenken der Bewegung einer Vielzahl von Chargenliefersystemen (18), die Material (14) von mindestens einem Ladebereich (20) zu mindestens einem Endlosmaterialprozessor (16) liefern, umfassend:
ein Netzwerk (34);
eine Vielzahl von Sensoren (28, 30), die operativ mit jedem der Vielzahl von Chargenliefersystemen (18) und dem Netzwerk (34) verbunden sind, wobei die Vielzahl von Sensoren (28, 30) so konfiguriert ist, dass sie mindestens eine Position und einen Zustand (48) jedes der Vielzahl von Chargenliefersystemen (18) erfassen;
ein Verarbeitungssystem (32), das operativ mit dem Netzwerk (34) verbunden ist, wobei das Verarbeitungssystem (32) dazu konfiguriert ist,
einen Standort (46) von jedem von mindestens zwei der Vielzahl von Chargenliefersystemen (18) zu bestimmen;
einen Zustand (48) von jedem der lokalisierten Chargenliefersysteme (18) zu bestimmen; wobei das System (10) **dadurch gekennzeichnet ist, dass** das Verarbeitungssystem (32) dazu konfiguriert ist:
eine voraussichtliche Ankunftszeit (50) bei dem Endlosmaterialprozessor (16) jedes der mindestens zwei der Vielzahl von Chargenliefersystemen vorherzusagen,
wobei:
mindestens eines der mindestens zwei der Vielzahl von Chargenliefersystemen ein beladenes Chargenliefersystem (18) ist, das sich auf dem Weg vom Ladebereich (20) zum Endlosmaterialprozessor (16) befindet, und
mindestens ein weiteres der mindestens zwei der Vielzahl von Chargenliefersystemen ein leeres Chargenliefersystem (18) ist, das sich auf dem Weg zum Ladebereich (20) und dann, nach dem Beladen, auf dem Weg vom Ladebereich (20) zum Endlosmaterialprozessor (16) befindet;
eine Gesamtzahl (52) beladener Chargenliefersysteme (18) vorherzusagen, die sich zu einem zukünftigen Zeitpunkt am Endlosmaterialprozessor (16) befinden werden, basierend auf mindestens den vorhergesagten geschätzten Ankunftszeiten jedes der mindestens zwei der Vielzahl von Chargenliefersystemen (18);
eine Leerlaufzeit (54) für mindestens eines der vorhergesagten Gesamtzahl (52) beladener Chargenliefersysteme (18) zu schätzen, die sich zu dem zukünftigen Zeitpunkt am Endlosmaterialprozessor (16) befinden werden; und
einen Zeitpunkt (56) vorherzusagen, zu dem sich der Endlosmaterialprozessor (16) in einem Zustand "Kein Material" befinden wird; und
einen Direktor (38), der betriebsmäßig mit der Vielzahl von Chargenliefersystemen (18) und dem Verarbeitungssystem (32) verbunden ist, wobei der Direktor (38) dazu konfiguriert ist, die Bewegung von mindestens einem der Vielzahl von Chargenliefersystemen (18) auf der Grundlage der vorhergesagten Gesamtanzahl beladener Chargenliefersysteme (18) zu leiten, die sich zu einem zukünftigen Zeitpunkt an dem Endlosmaterialprozessor (16) befinden werden, um mindestens die geschätzte Leerlaufzeit und die Zeit, in der sich der Endlosmaterialprozessor (16) im Zustand "Kein Material" befinden wird, zu minimieren.

17. Computerprogrammprodukt, das Anweisungen umfasst, die, wenn das Computerprogrammprodukt von einem Computer ausgeführt wird, den Computer veranlassen, die Schritte des Verfahrens nach einem der Ansprüche 1 bis 15 auszuführen.

## Revendications

1. Procédé (44) mis en œuvre par ordinateur permettant de diriger le mouvement d'une pluralité de systèmes de distribution par lots (18) distribuant des matériaux (14) à partir d'au moins une zone de chargement (20) vers au moins un processeur de matériaux en continu (16), comprenant :
la détermination d'un emplacement (46) de chacun parmi au moins deux de la pluralité de systèmes de distribution par lots (18) ;
la détermination d'un état (48) de chacun des systèmes de distribution par lots localisés (18) ;
**caractérisé par :**
la prévision d'un temps d'arrivée estimé (50) au processeur de matériaux en continu (16) de chacun parmi l'au moins deux de la pluralité de systèmes de distribution par lots, dans lequel :
au moins l'un parmi l'au moins deux de la pluralité de systèmes de distribution par lots est un système de distribution par lots chargés (18) en transit de la zone de chargement (20) vers le processeur de matériaux en continu (16), et
au moins un autre parmi l'au moins deux de la pluralité de systèmes de distribution par lots est un système de distribution par lots vides (18) en transit vers la zone de chargement (20) et ensuite, après le chargement, en transit de la zone de chargement (20) vers le processeur de matériaux en continu (16) ;
la prévision d'un nombre total (52) de systèmes de distribution par lots chargés (18) qui seront situés au niveau du processeur de matériaux en continu (16) à un moment ultérieur, sur la base au moins des temps d'arrivée prévus et estimés de chacun parmi l'au moins deux de la pluralité de systèmes de distribution par lots (18) ;
l'estimation d'un temps d'inactivité (54) pour au moins l'un parmi le nombre total prévu de systèmes de distribution par lots chargés (18) qui seront situés au niveau du processeur de matériaux en continu (16) au moment ultérieur ;
la prévision d'un temps (56) pendant lequel le processeur de matériaux en continu (16) sera dans un état sans matériaux ; et
la direction du mouvement (63) d'au moins l'un parmi la pluralité de systèmes de distribution par lots (18) sur la base du nombre total prévu de systèmes de distribution par lots chargés (18) qui seront situés au niveau du processeur de matériaux en continu (16) au moment ultérieur, afin de minimiser au moins l'un parmi le temps d'inactivité estimé et le temps pendant lequel le processeur de matériaux en continu (16) sera dans l'état sans matériaux.

2. Procédé (44) selon la revendication 1, dans lequel ladite direction du mouvement (63) d'au moins l'un parmi la pluralité de systèmes de distribution par lots (18) comprend en outre la direction du mouvement (63) d'au moins l'un parmi la pluralité de systèmes de distribution par lots (18) afin de minimiser à la fois le temps d'inactivité estimé et le temps pendant lequel le processeur de matériaux en continu (16) sera dans l'état sans matériaux.

3. Procédé (44) selon la revendication 2, dans lequel ladite direction (63) comprend l'attribution d'une destination à au moins l'un parmi les systèmes de distribution par lots chargés (18).

4. Procédé (44) selon la revendication 1, dans lequel ladite direction (63) comprend l'attribution d'une destination à au moins l'un parmi les systèmes de distribution par lots vides (18).

5. Procédé (44) selon l'une quelconque des revendications 1-4, comprenant en outre la direction du mouvement (63) d'au moins l'un parmi les systèmes de distribution par lots (18) afin d'empêcher le nombre total prévu de systèmes de distribution par lots chargés (18) au niveau du processeur de matériaux en continu (16) de dépasser un nombre défini au moment ultérieur.

6. Procédé (44) selon l'une quelconque des revendications 1-5, dans lequel ladite prévision (56) du temps pendant lequel le processeur de matériau continu (16) sera dans l'état sans matériaux comprend la prévision d'un niveau (61) d'un bac de rétention (56) associé de manière opérationnelle au processeur de matériau continu (16).

7. Procédé (44) selon l'une quelconque des revendications 1-6, comprenant en outre la prévision du temps pendant lequel le processeur de matériaux en continu (16) sera dans un état d'acceptation de matériaux.

8. Procédé (44) selon la revendication 7, dans lequel ladite prévision du temps pendant lequel le processeur de matériaux en continu (16) sera dans l'état d'acceptation de matériaux comprend la prévision d'un niveau (61) d'un bac de rétention (58) associé de manière opérationnelle au processeur de matériaux en continu (16).

9. Procédé (44) selon l'une quelconque des revendications 1-8, comprenant en outre :
la détermination du temps pendant lequel au moins l'un parmi la pluralité de systèmes de distribution par lots (18) est dans au moins l'un parmi un état d'arrêt ou un état retardé ; et
la prévision d'un temps restant dans l'au moins l'un parmi l'état d'arrêt ou l'état retardé.

10. Procédé (44) selon la revendication 9 dans lequel ladite prévision du temps restant dans l'au moins l'un parmi l'état d'arrêt ou l'état retardé est basée sur des données historiques.

11. Procédé (44) selon l'une quelconque des revendications 1-10, comprenant en outre :
la prévision d'un lieu de déversement pour au moins un système de distribution par lots vides (18) en transit vers la zone de chargement (20) ; et
dans lequel ladite prévision du nombre total de systèmes de distribution par lots chargés (18) qui seront situés au niveau du processeur de matériaux en continu (16) au moment ultérieur est basée sur le lieu de déversement prévu pour l'au moins un système de distribution par lots vides (18) en transit vers la zone de chargement (20).

12. Procédé (44) selon la revendication 11, dans lequel ladite prévision du lieu de déversement comprend en outre la prévision d'un type de matériau à charger dans le système de distribution par lots vides (18) au niveau de la zone de chargement (20), le lieu de déversement prévu étant basé sur le type de matériau prévu.

13. Procédé (44) selon la revendication 12, comprenant en outre :
la détermination d'un type de matériau effectivement chargé dans le système de distribution par lots vides (18) ;
l'attribution d'une destination au système de distribution par lots chargés (18) sur la base du type de matériau effectivement chargé ; et
dans lequel la prévision du nombre total de systèmes de distribution par lots chargés (18) qui seront situés au niveau du processeur de matériaux en continu (16) au moment ultérieur est basée sur la destination attribuée au système de distribution par lots chargés (18).

14. Procédé (44) selon l'une quelconque des revendications 1-13, comprenant en outre :
la génération (53) d'une fenêtre de prévision (40), ladite fenêtre de prévision (40) comportant au moins une prévision du nombre total de systèmes de distribution par lots chargés (18) au niveau du processeur de matériaux en continu (16) à chacun parmi une pluralité de moments ultérieurs ; et
la détermination (92) d'un seuil d'horizon des événements (42) pour la fenêtre de prévision (40).

15. Procédé (44) selon l'une quelconque des revendications 1-14, dans lequel l'état (48) de chacun parmi au moins deux de la pluralité de systèmes de distribution par lots (18) comprend un ou plusieurs choisis dans le groupe constitué d'un état d'inactivité dans la file d'attente, d'un état ponctuel, d'un état d'inactivité face à l'équipement, d'un état de chargement et d'un état de déversement.

16. Système (10) permettant de diriger le mouvement d'une pluralité de systèmes de distribution par lots (18) distribuant des matériaux (14) à partir d'au moins une zone de chargement (20) vers au moins un processeur de matériaux en continu (16), comprenant :
un réseau (34) ;
une pluralité de capteurs (28, 30) associés de manière opérationnelle à chacun de ladite pluralité de systèmes de distribution par lots (18) et audit réseau (34), ladite pluralité de capteurs (28, 30) étant configurés pour détecter au moins une position et un état (48) de chacun de la pluralité de systèmes de distribution par lots (18) ;
un système de traitement (32) associé de manière opérationnelle audit réseau (34), ledit système de traitement (32) étant configuré pour :
déterminer un emplacement (46) de chacun parmi au moins deux de la pluralité de systèmes de distribution par lots (18) ;
déterminer un état (48) de chacun des systèmes de distribution par lots localisés (18) ; le système (10) étant **caractérisé par le fait que** le système de traitement (32) est configuré pour :
prévoir un temps d'arrivée estimé (50) au processeur de matériaux en continu (16) de chacun parmi l'au moins deux de la pluralité de systèmes de distribution par lots,
dans lequel :
au moins l'un parmi l'au moins deux de la pluralité de systèmes de distribution par lots est un système de distribution par lots chargés (18) en transit de la zone de chargement (20) vers le processeur de matériaux en continu (16), et
au moins un autre parmi l'au moins deux de la pluralité de systèmes de distribution par lots est un système de distribution par lots vides (18) en transit vers la zone de chargement (20) et ensuite, après le chargement, en transit de la zone de chargement (20) vers le processeur de matériaux en continu (16) ;
prévoir un nombre total (52) de systèmes de distribution par lots chargés (18) qui seront situés au niveau du processeur de matériaux en continu (16) à un moment ultérieur, sur la base au moins des temps d'arrivée prévus et estimés de chacun parmi l'au moins deux de la pluralité de systèmes de distribution par lots (18) ;
estimer un temps d'inactivité (54) pour au moins l'un parmi le nombre total (52) prévu de systèmes de distribution par lots chargés (18) qui seront situés au niveau du processeur de matériaux en continu (16) au moment ultérieur ; et
prévoir un temps (56) pendant lequel le processeur de matériaux en continu (16) sera dans un état sans matériaux ; et
un directeur (38) associé de manière opérationnelle à ladite pluralité de systèmes de distribution par lots (18) et audit système de traitement (32), ledit directeur (38) étant configuré pour diriger le mouvement d'au moins l'un parmi la pluralité de systèmes de distribution par lots (18) sur la base du nombre total prévu de systèmes de livraison par lots chargés (18) qui seront situés au niveau du processeur de matériaux en continu (16) au moment ultérieur, afin de minimiser au moins l'un parmi le temps d'inactivité estimé et le temps pendant lequel le processeur de matériaux en continu (16) sera dans l'état sans matériaux.

17. Produit de programme informatique comprenant des instructions qui, lorsque le produit de programme informatique est exécuté par un ordinateur, amènent l'ordinateur à exécuter les étapes du procédé selon l'une quelconque des revendications 1-15.
